# EUROPÄISCHE PATENTSCHRIFT

(11) **EP 4 044 879 B1**
(45) Veröffentlichungstag und Bekanntmachung des Hinweises auf die Patenterteilung: **20.03.2024**
(21) Anmeldenummer: 20775216.3
(22) Anmeldetag: 10.09.2020
(51) Int. Cl.: A47J 31/42

(54) **VERFAHREN ZUM ERZEUGEN VON KAFFEE SOWIE EINE EINRICHTUNG ZUR DURCHFÜHRUNG DES VERFAHRENS**
METHOD FOR PRODUCING COFFEE, AND A DEVICE FOR CARRYING OUT SAID METHOD
PROCÉDÉ DE PRODUCTION DE CAFÉ ET DISPOSITIF DE MISE EN OEUVRE DUDIT PROCÉDÉ

(30) Priorität: 14.10.2019 CH 13102019
(43) Veröffentlichungstag der Anmeldung: 24.08.2022
(73) Patentinhaber: Steiner AG Weggis, 6353 Weggis (CH)
(72) Erfinder: STEINER, Adrian, 6353 Weggis (CH)
(74) Vertreter: Luchs, Willi
(86) Internationale Anmeldenummer: PCT/EP2020/075371
(87) Internationale Veröffentlichungsnummer: WO 2021/073810

(56) Entgegenhaltungen:
- WO-A1-2019/046812
- DE-A1- 3 130 346
- FR-A1- 2 425 220
- IE-A1- 20 110 230

## Beschreibung

Die Erfindung betrifft ein Verfahren zum Erzeugen von Kaffee bzw. eine dazugehörige Einrichtung nach dem Oberbegriff des Anspruchs 1 bzw. 12.

Bei einem bekannten Verfahren gemäss der Druckschrift US-A-6,192,785 kann kalter Kaffee mit oder ohne Milch bei einer Kaffeemaschine ausgelassen werden, indem der kalte Kaffee in einem Behälter vorpräpariert eingefüllt ist und gesteuert von einer Pumpe angesaugt und via ein Verbindungselement in Leitungen und entsprechenden Schliessventilen entweder durch einen Durchlauferhitzer aufgeheizt oder durch die eine Leitung in kaltem Zustand direkt zur Auslassdüse geleitet werden. Dieser in den Behälter eingefüllte Kaffee wird vorgängig auf herkömmliche Weise durch Brühen mittels heissem Wasser erzeugt und anschliessend in den Behälter gefüllt und gekühlt. Es kann damit wahlweise kalter oder heisser Kaffee ausgelassen werden, der aber nicht als frischer Kaffee erzeugt ist.

Die Druckschrift IE 20 110 230 A1 offenbart eine Kaffeemahl- und Brühvorrichtung zum Brühen von Kaffee aus gerösteten Kaffeebohnen, die eine Mühle, ein Wasserverteilungssystem zum Zuführen von Wasser in die Mühle und eine Brühkammer umfasst. Es werden geröstete Kaffeebohnen und eine Menge Wasser in die Mühle gegeben und die Bohnen werden nass gemahlen, wobei die resultierende Mischung aus gemahlenem Kaffee und Wasser von der Mühle direkt in die Brühkammer geleitet wird. Dabei wird zusätzliches Wasser hinzugefügt und der Kaffee wird in einem bestimmten Zeitraum gebrüht. Anschliessend wird dieser gebrühte Kaffee aus der Brühkammer durch einen Auslass abgelassen.

In der Druckschrift FR 2 425 220 ist ein Gerät offenbart, welches einen Brühbehälter, einen Deckel, einen unteren Kolben und einen Trichter umfasst. Eine mobile Schublade bewegt sich parallel zur Achse des Wagenhebers und horizontal auf einer Stütze. Der Brühbehälter bewegt sich vertikal nach unten, um den gemahlenen Kaffee aufzunehmen, bzw. nach oben, um durch den Deckel geschlossen zu werden. Zudem ist eine Heisswasser-Einheit vorgesehen, deren Funktion darin besteht, bei einem Druck und für eine bestimmte Zeit eine Wassermenge mit einer vorgegebenen Temperatur einzuspritzen.

In der Druckschrift WO 2019/046812 ist eine Vorrichtung offenbart, die einen nassen Mahlprozess beinhaltet, mittels dem Kaffee gebrüht wird. Es wird in einem krugähnlichen Behälter unterseitig in einem Mahlwerk gemahlen. Es ist aber nicht vorgesehen, dass diese Vorrichtung in einer Kaffeemaschine integriert ist.

Bei einem Verfahren gemäss der Druckschrift DE 3 130 346 besteht die Herstellung einer Grundsubstanz für türkischen Kaffee darin, dass die Kaffeebohnen zu Partikeln mit einer Partikelgrösse von unter 100 µm gemahlen werden und der Mahlvorgang als Nassmahlung durch Zugabe von Flüssigkeit durchgeführt wird.

Der Erfindung liegt die Aufgabe zugrunde, ein Verfahren bzw. eine Einrichtung zu schaffen, mittels dem insbesondere kalter Kaffee in relativ kurzer Zeit erzeugt werden kann und der zugerichtete Kaffee dabei über einen speziell gehaltvollen Geschmack verfügt und mit ihm die in den Kaffeebohnen enthaltenen Geschmackstoffe besser extrahiert werden. Diese Aufgabe wird erfindungsgemäss nach den Merkmalen des Anspruchs 1 bzw. des Anspruchs 12 gelöst.

Mit diesem erfindungsgemässen Verfahren, bei dem die Kaffeebohnen mit oder ohne Wasserzugabe sehr fein gemahlen und eine Mischung aus dem Kaffeepulver und Wasser gebildet und aus dieser Mischung der Kaffee extrahiert und zum Auslass befördert wird, ergibt sich eine köstliche neuartige Geschmacksfülle des damit erzeugten Kaffees. Bei einer erfindungsgemässen Ausführungsvariante werden Kaffeebohnen und Wasser in den Mahlraum wenigstens einer Mühle zugeführt und die Kaffeebohnen zusammen mit dem eingefüllten Wasser gemahlen. Damit findet bereits beim Mahlen ein Vermischen von Kaffee und Wasser statt, was die Extraktion des daraus filtrierten Kaffees verbessert.

Sehr vorteilhaft wird kaltes Wasser bei Raumtemperatur für das Mischen und Extrahieren des Kaffees verwendet. Es kann vorteilhaft vor dem Zumischen und/oder danach zusätzlich gekühlt werden, weil sich das Wasser beim Mahlen erwärmt. Es kann aber auch heisses Wasser benutzt werden.

Das Mischverhältnis der Kaffeebohnen zum Wasser, die Zeitdauer des Mahlens und/oder der Mahlgrad der Kaffeepulvers werden vorgegeben, so dass der daraus extrahierte Kaffee den gewünschten Geschmack aufweist.

Erfindungsgemäss wird das Verfahren in einer Kaffeemaschine verwendet, bei der heisser Kaffee durch Brühen erzeugt und ausgelassen werden kann. Mit dieser zusätzlichen Option kann Kaffee mit dem herausragenden Geschmack per Knopfdruck in der gleichen Zeit wie der üblich erzeugte gebrühte Kaffee hergestellt und ausgelassen werden.

Die Erfindung sowie weitere Vorteile derselben sind nachfolgend anhand von Ausführungsbeispielen unter Bezugnahme auf die Zeichnung näher erläutert. Es zeigt:
- Fig. 1: einen schematischen Schnitt durch eine Einheit einer erfindungsgemässen Einrichtung beim Befüllen einer Mischung in einer Kammer in einem Zylinder;
- Fig. 2: einen schematischen Schnitt der Einheit beim Drücken eines Kolbens im Zylinder;
- Fig. 3: einen schematischen Schnitt der Einheit im zusammengepressten Zustand der Mischung; und
- Fig. 4: einen schematischen Schnitt der Einheit, bei dem der Zylinder und der eine Kolben vom andern Kolben weggezogen sind.

Es ist ein Verfahren zum Erzeugen von Kaffee vorgesehen, bei dem Kaffeebohnen gemahlen und aus dem Kaffeepulver und Wasser der Kaffee erzeugt und zu einem Auslass geführt wird. Bei den Kaffeebohnen werden mit Vorteil geröstete oder zumindest leicht geröstete Bohnen verwendet, die je nach Geschmacksrichtung aus verschiedenen Gebieten herkommen können, wo solche gepflanzt werden.

Erfindungsgemäss werden die Kaffeebohnen mit oder ohne Wasserzugabe sehr fein gemahlen und eine Mischung aus dem Kaffeepulver und Wasser gebildet und aus dieser Mischung der extrahierte Kaffee insbesondere filtriert und zum Auslass befördert.

Bei einem Ausführungsbeispiel werden Kaffeebohnen und Wasser in einen Mahlraum einer Mühle zugeführt und die Kaffeebohnen zusammen mit dem eingefüllten Wasser gemahlen und die Mischung gebildet, und daraus der extrahierte Kaffee vorzugsweise zu einem Auslass befördert. Es kann kaltes Wasser annähernd bei Raumtemperatur für die Mahlung in den Mahlraum der Mühle zugeführt werden. Dieses kalte Wasser wird vorteilhaft vor dem Zumischen in den Mahlraum und/oder danach zusätzlich gekühlt, weil sich das Wasser beim Mahlen erwärmt, so dass es beim Auslass als extrahierter Kaffee annähernd Raumtemperatur oder eine wählbare Temperatur aufweist. Dies kann durch entsprechende Kühlmittel und gegebenenfalls durch eine Temperatursteuerung erfolgen. Bei dem Wasser kann Trinkwasser verwendet werden, das über einen hohen Reinheitsgrad verfügt und nicht chlorhaltig ist. Es könnte aber auch ein Wassergemisch mit geschmacklichen oder anderen Zutaten verwendet werden.

Die in den Mahlraum einfüllbaren Kaffeebohnen und das Wasser werden vorzugsweise genau dosiert, so dass ein vorgegebenes Mischverhältnis entsteht, das so gewählt ist, dass ein optimaler Geschmack bei dem daraus extrahierten Kaffee entsteht. Ebenso wird die Zeitdauer des Mahlens und mit ihr der Mahlgrad der Kaffeepulvers festgelegt. Je feiner die Korngrössen des gemahlenen Kaffees sind, umso besser ist die Durchdringung des Wassers in der Mischung und damit kann der Geschmack von ihm weitgehend absorbiert werden. Diese Korngrössen bei dem Kaffeepulver betragen durchschnittlich vorzugsweise weniger als 200 µm und vorteilhaft sogar weniger als 150 µm.

Zweckmässigerweise ist sowohl beim Auslass beim Kaffeebohnenbehälter als auch bei der Wasserzufuhrleitung jeweils ein Dosiermittel vorhanden, welche je von einer Steuerung betätigbar sind, was nicht näher gezeigt ist. Mit diesen Dosiermitteln wird ermöglicht, dass die Mengenzufuhr der beiden zum einen genau dosiert und zum andern auch variiert werden kann.

Das Wasser kann je nachdem vor, gleichzeitig oder nach einer bestimmten Mahlzeit der Kaffeebohnen in den Mahlraum der Mühle eingelassen werden. Dies hängt von zu berücksichtigenden Faktoren ab, wie zum Beispiel vom Härtegrad der Kaffeebohnen.

Bevor der Kaffee aus der Mischung extrahiert wird, kann es vorteilhaft sein, die gebildete breiartige Mischung aus dem Kaffeepulver und dem Wasser über eine Zeitdauer beispielsweise in einem separaten Behälter zu belassen, um damit die Geschmacksübertragung vom Pulver in das Wasser noch zu verbessern. Zudem kann dabei eine Abkühlung des gebildeten Kaffees je nach Bedarf durch eine Temperatursteuerung erfolgen.

Die Einrichtung zur Durchführung des oben erläuterten erfindungsgemässen Verfahrens besteht aus mindestens einem Kaffeebohnen enthaltenden Behälter, mindestens einer Mühle mit einem Mahlraum zum Mahlen der Kaffeebohnen sowie einer Einheit 10 zum Erzeugen des Kaffees und einem Auslass in einen Trinkbehälter. Dieser Einrichtung ist eine Programmsteuerung mit einem Display mit Touchscreen oder dergleichen zugeordnet, mittels der das angestrebte Verfahren gesteuert durchgeführt werden kann. Der Einrichtung können selbstverständlich noch weitere Elemente zugehören.

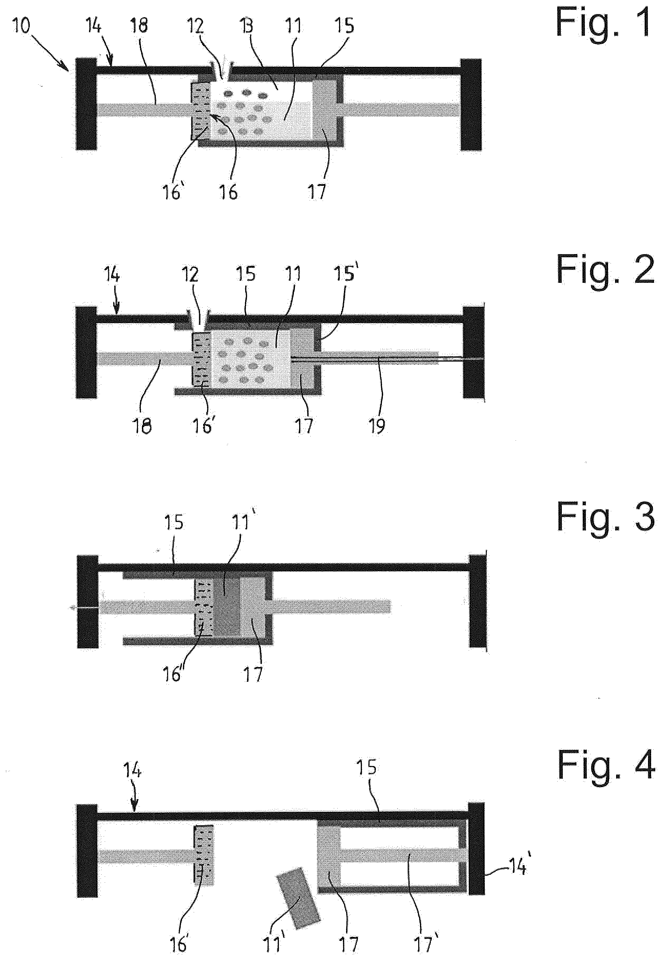

Fig. 1 bis Fig. 4 zeigen prinziphaft eine Einheit 10 für die Extraktion des Kaffees aus der gebildeten Mischung 11 aus Kaffeepulver und Wasser. Sie umfasst einen in einem angedeuteten Gehäuserahmen 14 hin- und herverschiebbaren Zylinder 15 mit wenigstens einer Einfüllöffnung 12 und zwei in diesem eine abgedichtete Kammer 13 bildende, relativ zueinander verschiebbare Kolben 16, 17. Der eine Kolben 16 ist mit einem Sieb 16' versehen und an eine Auslassleitung 18 angeschlossen. Er ist dabei fix am Gehäuserahmen 14 befestigt und kann nicht bewegt werden. Der gegenüberliegende Kolben 17 ist von einem nicht gezeigten Antrieb im Zylinder 15 verschiebbar gelagert, wie nachfolgend noch erläutert ist.

Die Zufuhr der Kaffeebohnen und des Wassers in die ebenfalls nicht veranschaulichte Mühle mit dem Mahlraum mit mindestens einer Öffnung erfolgt durch ein Fördermittel, zum Beispiel eine Förderschnecke und durch eine Wasserpumpe. Die Mühle weist ausgangsseitig eine Verbindungsleitung auf, welche in die Einfüllöffnung 12 des Zylinders 15 führt. Der Kaffeebohnenbehälter könnte aber auch auf bekannte Weise oberhalb der Mühle angeordnet sein und damit die Kaffeebohnen sich stets oberhalb der Mühle befinden und ohne Fördermittel zugeführt werden.

Fig. 1 zeigt die Kolben 16, 17, die je endseitig abdichtend im Zylinder 15 positioniert sind, bei dem sich die Einfüllöffnung 12 in einer Offenposition befindet und die Mischung 11 aus Wasser und Kaffeepulver aus der Mühle portionenweise in diese Kammer 13 eingefüllt wird.

Sobald die Kammer 13 vorzugsweise annähernd mit der Mischung 11 gefüllt ist, wie dies in Fig. 2 ersichtlich ist, wird der Zylinder 15 und mit seiner Rückseite 15' der eine Kolben 17 in Verschieberichtung gegen den andern feststehenden Kolben 16 gedrückt und dabei wird die Einfüllöffnung 12 im Zylinder durch letzteren geschlossen und durch den Pressdruck des Kolbens 17 auf die Mischung 11 wird die Kaffeeflüssigkeit durch dieses filtrierende Sieb 16' gedrückt und im extrahierten Zustand durch die Auslassleitung 18 zu einem Auslass gefördert und in eine Tasse oder ähnlichem eingefüllt.

Das Andrücken des einen Kolbens 17 gegen den andern Kolben 16 innerhalb des Zylinders 15 kann durch Erzeugen eines Unterdrucks in der Kammer 13 zusätzlich zum mechanischen Zusammendrücken der beiden Kolben erfolgen, was nicht näher dargestellt ist. Es müsste zumindest eine zuschaltbare Leitungsverbindung zwischen einer Vorrichtung zur Erzeugung eines Unterdrucks (Vakuum) und der Kammer 13 via den einen oder beide Kolben 16, 17 und/oder via den Zylinder 15 vorgesehen sein.

Es kann ferner im Kolben 17 eine Durchlassöffnung 19 für Wasser vorgesehen sein, um bei Bedarf Wasser zuzuführen, um zu spülen oder wenn beispielsweise die Mischung zu dickflüssig oder wenn der Durchlass durch das Sieb 16' verstopft wäre, wie dies in Fig. 2 angedeutet ist.

Fig. 3 zeigt die Endposition des Zylinders 15 und mit ihm des mitgeführten Kolbens 17, bei welcher annähernd sämtlicher Kaffee extrahiert ist und einzig noch der Kaffeesatz 11' als komprimierter Kuchen in der Kammer 13 verbleibt.

Gemäss Fig. 4 wird der Zylinder 15 und der in diesem verbleibende Kolben 17 nach der abgeschlossenen Extraktion mit seiner Kolbenstange 17' bis gegen eine Anschlagwand 14' des Gehäuserahmens 14 zurückgezogen. Die Längen des Zylinders 15 und des Kolbens 17 sind so bemessen, dass wenn diese anschlagen, dass der Kaffeesatz 11' vom Kolben 17 aus dem Zylinder 15 ausgeschoben und nach unten in einen Auffangbehälter fällt.

Als vorteilhafte Variante könnte nicht nur der eine Kolben 16 mit einem Sieb 16' versehen und an eine Auslassleitung 18 angeschlossen sein, sondern auch dem gegenüberliegenden Kolben 17 könnte ein Sieb und eine Auslassleitung zugeordnet sein. Ebenso könnte die Durchlassöffnung 19 im einen oder in beiden Kolben für die Zufuhr von Wasser vorgesehen sein, um bei Bedarf Wasser zuzuführen, die parallel zu der jeweiligen Auslassleitung angeordnet wären. Es wären dann entsprechende Ventile bei diesen Leitungen vorgesehen, um die erläuterten Funktionen auszuführen.

Sehr vorteilhaft ist diese Einrichtung zum Erzeugen von insbesondere kaltem Kaffee in einer Kaffeemaschine integriert, bei der zur Hauptsache nebst Milch bzw. Milchschaum heisser Kaffee erzeugt und ausgelassen werden kann. Diese Einrichtung könnte im Prinzip derart integriert sein, dass die ohnehin vorhandenen Behälter mit Kaffeebohnen und der Wasseranschluss verwendet würden. Die Einheit 10 für das Extrahieren des kalten Kaffees und der Auslass frontseitig bei der Kaffeemaschine wären separat eingebaut.

Die Erfindung ist mit den oben erläuterten Ausführungsbeispielen ausreichend dargetan. Sie liesse sich jedoch noch durch weitere Varianten erläutern. Der extrahierte Kaffee könnte auch nicht direkt zum Auslass, sondern in einem Behälter über eine bestimmte Zeitdauer konserviert und erst danach zum Auslass geführt werden. Damit entstünde der Vorteil, dass der Geschmack des extrahierten Kaffees noch ausgeprägter bzw. intensiver wäre.

Es könnte dabei kaltes oder auch erwärmtes Wasser verwendet werden. Es wäre auch ein Wassergemisch mit zum Beispiel die Extraktion bzw. die Geschmacksfülle fördernden Mitteln für die Mischung möglich.

Die Einheit 10 mit dem horizontal verschiebbaren Zylinder 15 und Kolben 17 könnte mitunter aus Platzgründen auch vertikal oder in einem Winkel dazwischen angeordnet sein.

Es könnte sich auch um Kaffeemaschinen handeln, die auf bekannte Art und Weise mit abnehmbaren Kolben versehen sind, in welche entweder Kaffeepulver eingefüllt oder Pads eingelegt werden, die ebenso zusätzlich mit einer Einrichtung gemäss der Erfindung ausgerüstet sein könnten.

## Patentansprüche

1. Verfahren zum Erzeugen von Kaffee, bei dem Kaffeebohnen gemahlen und aus dem Kaffeepulver und Wasser der Kaffee erzeugt und zu einem Auslass geführt wird, wobei die Kaffeebohnen mit oder ohne Wasserzugabe sehr fein gemahlen und eine Mischung aus dem Kaffeepulver und Wasser gebildet und aus dieser Mischung der Kaffee extrahiert und zum Auslass befördert wird, **dadurch gekennzeichnet, dass**
die Extraktion des Kaffees aus der gebildeten Mischung (11) aus Kaffeepulver und Wasser mittels einer Einheit (10) mit einem verschiebbaren Zylinder (15) mit wenigstens einer Einfüllöffnung (12) und zwei in diesem eine verschliessbare Kammer (13) bildenden, relativ zueinander verschiebbaren Kolben (16, 17) erfolgt, von denen wenigstens der eine aus einem Sieb (16') gebildet und an eine Auslassleitung (18) angeschlossen ist, wobei die Mischung (11) aus Wasser und Kaffeepulver in diese Kammer (13) eingefüllt und zumindest der eine Kolben (17) innerhalb des Zylinders (15) gegen den andern gedrückt und damit der Kaffee aus der Mischung (11) extrahiert und durch das Sieb (16') in die Auslassleitung (18) geleitet wird.

2. Verfahren nach Anspruch 1, **dadurch gekennzeichnet, dass** die Kaffeebohnen und das Wasser in den Mahlraum wenigstens einer Mühle zugeführt und die Kaffeebohnen mit dem eingefüllten Wasser gemahlen werden, und daraus die Mischung gebildet wird.

3. Verfahren nach Anspruch 1 oder 2, **dadurch gekennzeichnet, dass** kaltes oder erwärmtes Wasser zur Bildung der Mischung bei der Mahlung in den Mahlraum der Mühle und/ oder nach dem Mahlen zugeführt wird.

4. Verfahren nach einem der Ansprüche 1 bis 3, **dadurch gekennzeichnet, dass**
das Mischverhältnis der Kaffeebohnen zum Wasser, die Zeitdauer des Mahlens und/oder der Mahlgrad der Kaffeepulvers bestimmt werden, so dass der daraus extrahierte Kaffee den gewünschten Geschmack erlangt.

5. Verfahren nach einem der Ansprüche 2 bis 4, **dadurch gekennzeichnet, dass**
das Wasser vor, gleichzeitig oder nach einer bestimmten Mahlzeit der Kaffeebohnen in den Mahlraum der Mühle eingelassen wird.

6. Verfahren nach einem der Ansprüche 1 bis 5, **dadurch gekennzeichnet, dass**
die gebildete breiartige Mischung aus dem Kaffeepulver und dem Wasser über eine Zeitdauer belassen und anschliessend der extrahierte Kaffee daraus filtriert wird.

7. Verfahren nach Anspruch 1, **dadurch gekennzeichnet, dass** der Kolben (17), der zu dem das Sieb (16') aufweisenden Kolben (16) gegenüberliegt, eine Durchlassöffnung (19) für Wasser aufweist, um bei Bedarf Wasser in die Kammer (13) zuzuführen oder um zu spülen.

8. Verfahren nach Anspruch 1 oder 2, **dadurch gekennzeichnet, dass** der Zylinder (15) und der in diesem verbleibende Kolben (17) nach der abgeschlossenen Extraktion zurückziehbar sind, damit der Kaffeesatz (11') der Mischung (11) vom Kolben (17) aus dem Zylinder (15) ausschiebbar ist.

9. Verfahren nach einem der Ansprüche 1 bis 8, **dadurch gekennzeichnet, dass**
die durchschnittliche Korngrösse des gemahlenen Kaffeepulvers vorzugsweise weniger als 200 µm und vorteilhaft sogar weniger als 150 µm beträgt.

10. Verfahren nach einem der Ansprüche 1 bis 9, **dadurch gekennzeichnet, dass**
das Andrücken des einen Kolbens gegen den andern innerhalb des Zylinders (15) durch Erzeugen eines Unterdrucks in der Kammer (13) vorzugsweise zusätzlich zum mechanischen Zusammendrücken der beiden Kolben erfolgt.

11. Verfahren nach einem der Ansprüche 2 bis 10, **dadurch gekennzeichnet, dass**
das kalte Wasser vor dem Zumischen in den Mahlraum und/oder nach dem Mahlen als Mischung gekühlt wird, so dass es beim Auslass als extrahierter Kaffee annähernd Raumtemperatur oder eine wählbare Temperatur aufweist.

12. Einrichtung zur Durchführung des Verfahrens nach einem der Ansprüche 1 bis 11, mit mindestens einem Kaffeebohnen enthaltenden Behälter, wenigstens einer Mühle mit einem Mahlraum zum Mahlen der Kaffeebohnen, einer Einheit (10) zum Extrahieren des Kaffees und einem Auslass, **dadurch gekennzeichnet, dass**
die Einheit (10) einen verschiebbaren Zylinder (15) mit wenigstens einer Einfüllöffnung (12) und zwei in diesem eine Kammer (13) bildende, relativ zueinander verschiebbare Kolben (16, 17) aufweist, von denen wenigstens der eine aus einem Sieb (16') gebildet und an eine Auslassleitung (18) angeschlossen ist, wobei der Mahlraum der wenigstens einen Mühle mindestens je eine Öffnung für die Zufuhr der Kaffeebohnen und von Wasser und eine Verbindungsleitung aufweist, die in die Einfüllöffnung (12) des Zylinders führt.

13. Einrichtung nach Anspruch 12, **dadurch gekennzeichnet, dass** beiden Kolben (16, 17) je ein Sieb (16'), eine Auslassleitung (18) und zumindest dem einen Kolben eine Durchlassöffnung (19) für die Zufuhr von Wasser zugeordnet ist.

14. Einrichtung nach Anspruch 12 oder 13, **dadurch gekennzeichnet, dass**
eine Programmsteuerung vorgesehen ist, die mit einem Display mit Touchscreen oder ähnlichem versehen ist, mittels dem die Erzeugung des extrahierbaren Kaffees programmiert und ausgelöst werden kann.

15. Verwendung des Verfahrens nach einem der Ansprüche 1 bis 11, **dadurch gekennzeichnet, dass**
in einer Kaffeemaschine, bei der heisser Kaffee durch Brühen erzeugt und ausgelassen werden kann, Kaffeebohnen mit oder ohne Wasserzugabe sehr fein gemahlen und eine Mischung aus dem Kaffeepulver und Wasser gebildet und aus dieser Mischung der Kaffee extrahiert und zum Auslass der Kaffeemaschine befördert wird.

16. Verwendung nach Anspruch 15, **dadurch gekennzeichnet, dass** in die Kaffeemaschine Kaffeebohnen und Wasser in wenigstens eine separate Mühle mit einem Mahlraum eingelassen und die Kaffeebohnen zusammen mit dem eingefüllten Wasser gemahlen werden, und der Kaffee in der damit gebildeten Mischung extrahiert und zum Auslass der Kaffeemaschine befördert wird.

## Claims

1. Method for producing coffee, wherein coffee beans are ground and the coffee is produced from the coffee powder and water and conveyed to an outlet, whereby the coffee beans are very finely ground, with or without the addition of water, and a mixture of the coffee powder and water is formed, and from this mixture the coffee is extracted and conveyed to the outlet, **characterized in that**
the extraction of the coffee from the mixture (11) formed from coffee powder and water by means of a unit (10) with a movable cylinder (15) with at least one filling opening (12) and two pistons (16, 17) formed in this closable chamber (13), which can be moved relative to one another, of which at least one is formed from a screen sieve (16') and is connected to an outlet line (18), wherein the mixture (11) of water and coffee powder is filled into this chamber (13), and at least one piston (17) is pressed against the other inside the cylinder (15), and thereby the coffee is extracted from the mixture (11) and conveyed through the screen sieve (16') into the outlet line (18).

2. Method according to claim 1, **characterized in that**
the coffee beans and the water are delivered into the grinding chamber of at least one mill and the coffee beans are ground with the water which is introduced, and from this the mixture is formed.

3. Method according to claim 1 or 2, **characterized in that**
for forming the mixture, cold or heated water is introduced during the grinding into the grinding chamber of the mill, and/or after the grinding.

4. Method according to any one of claims 1 to 3, **characterized in that**
the mixing proportion of the coffee beans to the water, the time duration of the grinding, and/or the degree of grinding of the coffee powder, are determined in such a way that the coffee extracted from this has the desired taste.

5. Method according to any one of claims 2 to 4, **characterized in that**
the water is introduced into the grinding chamber of the mill simultaneously or after a specific grinding time of the coffee beans.

6. Method according to any one of claims 1 to 5, **characterized in that**
the mushy consistency mixture of the coffee powder and the water is left for a period of time, and the extracted coffee is then filtered out of it.

7. Method according to claim 1, **characterized in that**
the piston (17), which is opposite the piston (16) comprising the screen sieve (16'), comprises a passage opening (19) for water, in order, if required, to convey water into the chamber (13) or in order to carry out flushing.

8. Method according to claim 1 or 2, **characterized in that**
the cylinder (15) and the piston (17) remaining in it, can be retracted after the extraction is completed, in order for it to be possible for the coffee pack (11') from the mixture (11) to be pushed by the piston (17) out of the cylinder (15).

9. Method according to any one of claims 1 to 8, **characterized in that**
the average grain size of the ground coffee powder preferably amounts to less than 200 µm and advantageously even less than 150 µm.

10. Method according to any one of claims 1 to 9, **characterized in that**
the pressing of the one piston against the other inside the cylinder (15) takes place by the producing of a negative pressure in the chamber (13) preferably in addition to the mechanical compressing of the two pistons.

11. Method according to any one of claims 2 to 10, **characterized in that**
the cold water is cooled before the mixing into the grinding chamber and/or after the grinding as a mixture, such that, at the outlet, as extracted coffee, it exhibits approximately room temperature or a selectable temperature.

12. Device for carrying out the method according to any one of claims 1 to 11, with at least one container containing coffee beans, at least one mill with a grinding chamber for grinding the coffee beans, a unit (10) for extracting the coffee, and an outlet, **characterized in that**
the unit (10) comprises a movable cylinder (15) with at least one filling opening (12) and two pistons (16, 17), forming a chamber (13) and movable relative to one another, of which at least one is formed from a screen sieve (16') and is connected to an outlet line (18), wherein the grinding chamber of the at least one mill comprises in each case an opening for the delivery of the coffee beans and water, and a connection line, which leads into the filling opening (12) of the cylinder.

13. Device according to claim 12, **characterized in that**
assigned to both pistons (16, 17) in each case is a screen sieve (16'), an outlet line (18), and assigned to at least one piston is a passage opening (19) for the delivery of water.

14. Device according to claim 12 or 13, **characterized in that**
a program control device is provided, which comprises a display with a touchscreen or the like, by means of which the production of the extractable coffee can be programmed and actuated.

15. Use of the method according to any one of claims 1 to 11, **characterized in that**
in a coffee machine, in which hot coffee can be prepared by brewing and dispensed, coffee beans are ground very finely, with or without the addition of water, and a mixture of the coffee powder and water is formed, and from this mixture the coffee is extracted and conveyed to the outlet of the coffee machine.

16. Use according to claim 15, **characterized in that**
coffee beams and water are introduced into the coffee machine, into at least one separate mill with a grinding chamber, and the coffee beans are ground together with the water which is introduced, and the coffee in the mixture formed in this way is extracted and conveyed to the outlet of the coffee machine.

## Revendications

1. Procédé de production de café, dans lequel on broie des grains de café et, à partir de la poudre de café et de l'eau, on produit le café et on le conduit à une sortie, dans lequel on broie très finement les grains de café avec ou sans addition d'eau et on forme un mélange de poudre de café et d'eau et on extrait le café de ce mélange et on le transporte à la sortie, **caractérisé en ce que**
l'extraction du café du mélange (11) formé de poudre de café et d'eau s'effectue au moyen d'une unité (10) ayant un cylindre (15) coulissant ayant au moins une ouverture (12) de remplissage et deux pistons (16, 17) coulissants l'un par rapport à l'autre et formant, dans ce cylindre, une chambre (13) pouvant être fermée, dont l'un au moins est formé d'un tamis (16') et est raccordé à un conduit (18) de sortie, dans lequel on remplit cette chambre (13) du mélange (11) d'eau et de poudre de café et on pousse au moins l'un des pistons (17) dans le cylindre (15) contre l'autre et on extrait ainsi le café du mélange (11) et on le fait passer à travers le tamis (16') dans le conduit (18) de sortie.

2. Procédé suivant la revendication 1, **caractérisé en ce que** l'on envoie les grains de café et l'eau dans l'espace de broyage d'au moins un moulin et on broie les grains de café avec l'eau de remplissage et on en forme ainsi le mélange.

3. Procédé suivant la revendication 1 ou 2, **caractérisé en ce que**
l'on apporte de l'eau froide ou réchauffée pour la formation du mélange lors du broyage dans l'espace de broyage du moulin et /ou après le broyage.

4. Procédé suivant l'une des revendications 1 à 3, **caractérisé en ce que**
l'on détermine le rapport de mélange des grains de café à l'eau, la durée du broyage et/ou le degré de broyage de la poudre de café, de manière à ce que le café, qui en est extrait, ait le goût souhaité.

5. Procédé suivant l'une des revendications 2 à 4, **caractérisé en ce que**
l'on introduit l'eau dans la chambre de broyage du moulin, avant, en même temps ou après un temps de broyage déterminé des grains de café.

6. Procédé suivant l'une des revendications 1 à 5, **caractérisé en ce que**
l'on abandonne le mélange de type pâteux formé, composé de poudre de café et d'eau, pendant une durée et on en filtre ensuite le café extrait.

7. Procédé suivant la revendication 1, **caractérisé en ce que** le piston (17), qui est en face du piston (16) ayant le tamis (16'), a une ouverture (19) de passage pour de l'eau afin d'envoyer, en cas de besoin, de l'eau dans la chambre (13) ou pour la laver.

8. Procédé suivant l'une des revendications 1 ou 2, **caractérisé en ce que**
le cylindre (15) et le piston (17) y restant, sont, après l'extraction terminée, rétractables, afin que la composition (11') de café du mélange (11) puisse être retirée du cylindre (15) par le piston (17).

9. Procédé suivant l'une des revendications 1 à 8, **caractérisé en ce que**
la granulométrie moyenne de la poudre de café broyée est de préférence plus petite que 200 *µ*m et même avantageusement plus petite que 150 *µ*m.

10. Procédé suivant l'une des revendications 1 à 9, **caractérisé en ce que**
l'on obtient la poussée de l'un des pistons contre l'autre dans le cylindre (15) par production d'une dépression dans la chambre (13), de préférence supplémentairement à la poussée mécanique des deux pistons.

11. Procédé suivant l'une des revendications 2 à 10, **caractérisé en ce que**
l'on refroidit, comme mélange, l'eau froide, avant l'addition dans la chambre de broyage et/ou après le broyage, de manière à avoir à la sortie, comme café extrait, à peu près la température ambiante ou une température que l'on peut choisir.

12. Dispositif pour effectuer le procédé suivant l'une des revendications 1 à 11, comprenant au moins un récipient contenant des grains de café, au moins un moulin ayant un espace de broyage pour le broyage des grains de café, une unité (10) d'extraction du café et une sortie, **caractérisé en ce que**
l'unité (10) a un cylindre (15) coulissant ayant au moins une ouverture (12) de remplissage et deux pistons (16, 17) y formant une chambre (13) et pouvant coulisser l'un par rapport à l'autre, dont l'un au moins est formé d'un tamis (16') et est raccordé à un conduit (18) de sortie, dans lequel l'espace de broyage du au moins un moulin a au moins respectivement une ouverture pour l'apport des grains de café et d'eau et un conduit de liaison, qui mène à l'ouverture (12) de remplissage du cylindre.

13. Dispositif suivant la revendication 12, **caractérisé en ce que**,
aux deux pistons (16, 17) est affecté respectivement un tamis (16'), un conduit (18) de sortie et, à au moins l'un des pistons, une ouverture (19) de passage pour l'apport d'eau.

14. Dispositif suivant la revendication 12 ou 13, **caractérisé en ce qu'**
il est prévu une commande par programme, qui est pourvue d'un affichage à écran à touches ou analogue, au moyen duquel la production du café pouvant être extrait peut être programmée et déclenchée.

15. Utilisation du procédé suivant l'une des revendications 1 à 11,
**caractérisée en ce que**,
dans une machine à café, dans laquelle du café chaud peut être produit par macération et être sorti, on broie très finement des grains de café avec ou sans apport d'eau et on forme un mélange composé de poudre de café et d'eau et on extrait le café de ce mélange et le transporte à la sortie de la machine à café.

16. Utilisation suivant la revendication 15, **caractérisée en ce que**,
dans la machine à café, on introduit des grains de café et de l'eau dans un moulin distinct ayant un espace de broyage et on broie les grains de café ensemble avec l'eau introduite, et on extrait le café dans le mélange ainsi formé et on le transporte à la sortie de la machine à café.
